# EUROPEAN PATENT APPLICATION

(11) **EP 4 481 762 A1**
(43) Date of publication of application: **25.12.2024**
(21) Application number: 22857944.7
(22) Date of filing: 26.10.2022
(51) Int. Cl.: G21C 15/18, G21D 3/06

(54) **AUTOMATIC LOW-PRESSURE FULL-SPEED COOLING METHOD AND SYSTEM FOR NUCLEAR POWER PLANT UNIT**

(30) Priority: 09.03.2022 CN 202210233135
(71) Applicant: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: WANG, Taike, Shenzhen, Guangdong 518124 (CN); WU, Yuejun, Shenzhen, Guangdong 518124 (CN); SUN, Chen, Shenzhen, Guangdong 518124 (CN); MA, Tingwei, Shenzhen, Guangdong 518124 (CN); LIU, Zhiyun, Shenzhen, Guangdong 518124 (CN); WANG, Zhenying, Shenzhen, Guangdong 518124 (CN); HUANG, Yu, Shenzhen, Guangdong 518124 (CN); JIAO, Zhenying, Shenzhen, Guangdong 518124 (CN); KONG, Kaihe, Shenzhen, Guangdong 518124 (CN)
(74) Representative: Westphal, Mussgnug & Partner, Patentanwälte mbB
(86) International application number: PCT/CN2022/127783
(87) International publication number: WO 2023/020635

(57) **Abstract**

The present invention relates to an automatic low-pressure full-speed cooling method and system for a nuclear power plant unit. The method comprises: acquiring a unit operation parameter of a nuclear power unit and a state parameter of an important safety equipment, wherein the unit operation parameter comprise a primary-loop water loading amount and a residual heat removal state function parameter, and the state parameter of the important safety equipment comprises a state parameter of medium-pressure safety injection and a state parameter of a steam generator; performing logic calculation according to the unit operation parameter and the state parameters, and outputting a logic processing result; triggering an automatic low-pressure full-speed cooling signal according to the logic processing result; and executing automatic low-pressure full-speed cooling according to the automatic low-pressure full-speed cooling signal. By means of the present invention, on the basis of a logic processing result, the i accident condition of large-break coincident accident with a medium-pressure safety injection failure in a primary loop can be monitored, and when the accident is detected, an action of low-pressure full-speed cooling can be automatically executed, thereby quickly alleviating the accident condition, preventing the execution risk caused by human factors, and improving the safety margin of a unit under the accident condition.

## Description

### TECHNICAL FIELD

The invention relates to the technical field of nuclear power plants, in particular to an automatic low-pressure full-speed cooling method and system for a nuclear power plant unit.

### DESCRIPTION OF RELATED ART

In order to ensure that the reactor can retreat to a safe shutdown state under accident conditions, when the accident of "large-break coincident with a medium-pressure safety injection failure in the primary-loop" occurs in a PWR (pressurized water reactor) nuclear power plant, a safety injection signal will trigger an automatic action of medium-pressure fast cooling. After the medium-pressure fast cooling, The valve of the steam atmospheric emission system needs to be fully opened manually by an operator, so that the primary-loop can be cooled at the maximum rate. Its purpose is to rapidly reducing the primary-loop pressure below the injection head of the low-pressure safety injection when the medium-pressure safety injection function fails, and inject cooling water into the primary-loop through the low-pressure safety injection and recover the primary-loop water device. Therefore, the manual execution of low-pressure full-speed cooling by operators has become an important safety action to alleviate the accident of "large-break coincident with a medium-pressure safety injection failure in the primary-loop ".

At present, the state-oriented or symptom-oriented accident procedures are widely used in the three generations of PWR nuclear power plants, and the procedures adopt a "cyclic" execution structure. In each procedure of execution cycle, the operator executes the accident operation procedure in sequence, lacking emergency response to specific accident conditions. This makes the execution time of the important accident safety action "low-pressure full-speed cooling" easily exceed the requirement of its available time window under the accident condition of "large-break coincident with failure in the primary loop". Once the execution time of this action exceeds the limit, the condition of the reactor core will continue to deteriorate, and even cause core damage, which has a great risk of human performance.

### BRIEF SUMMARY OF THE INVENTION

The technical problem to be solved by the invention is to provide an automatic low-pressure full-speed cooling method and system for a nuclear power plant unit aiming at the defects of the prior art.

The invention adopts the technical scheme that an automatic low-pressure full-speed cooling method for a nuclear power plant unit which comprises the following steps of:
Acquiring unit operation parameters of a nuclear power unit and state parameters of important safety equipment, wherein the unit operation parameters comprise a primary-loop water inventory and residual heat removal state function parameters, and the state parameters of important safety equipment comprise state parameters of medium-pressure safety injection and state parameters of a steam generator;
Performing logic calculation according to the unit operation parameters and the state parameters, and outputting a logic processing result;
Triggering an automatic low-pressure full-speed cooling signal according to the logic processing result;
Executing an automatic low-pressure full-speed cooling function according to the automatic low-pressure full-speed cooling signal.

In the automatic low-pressure full-speed cooling method for a nuclear power plant unit, the primary-loop water inventory comprises pressure vessel liquid level data, and the residual heat removal state function parameters comprise containment pressure data, primary-loop pressure data and primary-loop temperature data.

The pressure vessel liquid level data is monitored in real time and output by a pressure vessel liquid level instrument, the containment vessel pressure data is monitored in real time and output by a containment vessel pressure instrument, the primary-loop pressure data is monitored in real time and output by a primary-loop pressure instrument, and the primary-loop temperature data is also monitored in real time and output by a primary-loop temperature instrument;
The state parameters of medium-pressure safety injection comprise a safety injection signal, a valve position signal of the medium-pressure safety injection, a pump state signal of the medium-pressure safety injection and an injection flow signal of the medium-pressure safety injection;
The state parameters of a steam generator comprise liquid level data of the steam generator, pressure data of the steam generator and internal radioactivity data of the steam generator.

In the automatic low-pressure full-speed cooling method for a nuclear power plant unit, the step of performing logic calculation according to the unit operation parameters and the state parameters, comprises following steps:
Analyzing the primary-loop water inventory or the residual heat removal state function parameters, and outputting a first logic result;
Analyzing the state parameters of the medium-pressure safety injection and outputting a second logic result;
Analyzing the state parameters of a steam generator, and outputting a third logic result;
And performing logic calculation according to the first logic result, the second logic result and the third logic result, and outputting the logic processing result.

In the automatic low-pressure full-speed cooling method for a nuclear power plant unit, the step of analyzing the primary-loop water inventory or the residual heat removal state function parameter and outputting a first logic result comprises:
Judging whether the primary-loop water inventory is degraded or not according to the pressure vessel liquid level data, and outputting a degradation judgment result of the primary-loop water inventory;
Performing undercooling logic calculation according to the containment pressure data, the primary-loop pressure data and the primary-loop temperature data, and outputting an undercooling data;
Judging whether the residual heat removal state function parameter is degraded or not according to the undercooling data, and outputting a degradation judgment result of the residual heat removal state function parameter;
And performing OR logic calculation according to the degradation judgment result of the primary-loop water inventory and the degradation judgment result of the residual heat removal state function parameter, and outputting an OR logic calculation result, wherein the OR logic calculation result is the first logic result.

In the automatic low-pressure full-speed cooling method of a nuclear power plant unit, the step of judging whether the residual heat removal state function parameter is degraded or not according to the undercooling data comprises the following steps of:
Comparing the undercooling data with an undercooling threshold;
And if the undercooling data is smaller than the undercooling low threshold, judging that the residual heat removal state function parameter is degraded.

In the automatic low-pressure full-speed cooling method for a nuclear power plant unit, the first logic result is 1 or 0;
The step of performing OR logic calculation according to the degradation judgment result of the primary-loop water inventory and the degradation judgment result of the residual heat removal state function parameter, and outputting an OR logic calculation result, comprises:
If the primary-loop water inventory is degraded and the residual heat removal state function parameter is degraded, the OR logic calculation result is 1;
If the primary-loop water inventory and the residual heat removal state function parameters are not degraded, the OR logic calculation result is 0.

In the automatic low-pressure full-speed cooling method for a nuclear power plant unit, the step of analyzing the state parameters of medium-pressure safety injection and outputting a second logic result comprises:
performing logic calculation according to the valve position signal, the pump state signal and the injection flow signal to obtain an operation state result of medium-pressure safety injection;
And performing logic calculation according to the safety injection signal and the operation state result to obtain the second logic result.

In the automatic low-pressure full-speed cooling method for a nuclear power plant unit, the step of analyzing the state parameters of the steam generator and outputting a third logic result comprises:
Comparing the liquid level data of the steam generator with a liquid level threshold and outputting a liquid level comparison result;
Comparing the pressure data of the steam generator with a pressure threshold and outputting a pressure comparison result;
Comparing the internal radioactivity data of the steam generator with a radioactivity threshold and outputting a radioactivity comparison result;
And performing logic calculation according to the liquid level comparison result, the pressure comparison result, the radioactivity comparison result and a medium-pressure fast cooling signal, and outputting the third logic result.

In the automatic low-pressure full-speed cooling method for a nuclear power plant unit according to the present invention, the step of performing logic calculation according to the first logic result, the second logic result and the third logic result, and outputting the logic processing result comprises:
Performing an AND logic calculation according to the first logic result and the second logic result to obtain an AND logic calculation result;
Judging whether the large-break coincident with a medium-pressure safety injection failure accident in the primary-loop occurs or not according to the AND logical calculation result, and outputting a diagnosis result of the large-break coincident with a medium-pressure safety injection failure accident in the primary-loop;
And performing logic calculation according to the diagnosis result of the large-break coincident with a medium-pressure safety injection failure accident in the primary-loop and the third logic result, and outputting the logic processing result to trigger an unit automatic low-pressure full-speed cool signal.

In the automatic low-pressure full-speed cooling method for a nuclear power plant unit, the step of executing automatic low-pressure full-speed cooling according to the automatic low-pressure full-speed cooling signal comprises:
Driving an executing equipment to automatically act or stop act according to the automatic low-pressure full-speed cooling signal.

In the automatic low-pressure full-speed cooling method for a nuclear power plant unit, after executing automatic low-pressure full-speed cooling according to the automatic low-pressure full-speed cooling signal, the method further comprises:
monitoring the pressure after triggering the primary-loop continuously;
Judging whether the pressure after triggering reaches a set value;
If yes, canceling mandatory signal.

The present invention also provides an automatic low-pressure full-speed cooling system for a nuclear power plant unit, comprising:
an acquisition unit is used for acquiring unit operation parameters of a nuclear power unit and state parameters of important safety equipment, wherein the unit operation parameters comprise a primary-loop water inventory of a PWR and residual heat removal state function parameters, and the state parameters of important safety equipment comprise state parameters of medium-pressure safety injection and state parameters of a steam generator;
a logic calculation unit is used for performing logic calculation according to the unit operation parameters and the state parameters and outputting a logic processing result;
a trigger unit is used for triggering an automatic low-pressure full-speed cooling signal according to the logic processing result;
And an execution unit is use for executing automatic low-pressure full-speed cool function according to the automatic low-pressure full-speed cooling signal.

The automatic low-pressure full-speed cooling method and system for a nuclear power plant unit have the beneficial effects that : acquiring unit operation parameters of a nuclear power unit and state parameters of important safety equipment, wherein the unit operation parameters comprise a primary-loop water inventory and residual heat removal state function parameters, and the state parameters of important safety equipment comprise state parameters of medium-pressure safety injection and state parameters of a steam generator; performing logic calculation according to the unit operation parameters and the state parameters, and outputting a logic processing result; Triggering an automatic low-pressure full-speed cooling signal according to the logic processing result; executing automatic low-pressure full-speed cooling according to the automatic low-pressure full-speed cooling signal. According to a logic processing result, the invention can monitor the accident working condition of the large-break coincident with a medium-pressure safety injection failure in the primary loop, and can automatically execute a low-pressure full-speed cooling action when the accident working condition is detected, so that the accident condition is quickly relieved, the human factor execution risk is avoided, and the safety margin of a machine set under the accident condition is improved.

### BRIEF DESCRIPTION OF THE SEVERAL VIEWS OF THE DRAWINGS

The present invention will be further explained in conjunction with the accompanying drawings and embodiments. In the accompanying drawings:
Fig. 1 is a schematic flow diagram of an automatic low-pressure full-speed cooling method for a nuclear power plant unit according to an embodiment of the present invention;
Fig. 2 is a logic diagram of an automatic low-pressure full-speed cooling method for a nuclear power plant unit according to an embodiment of the present invention;
Fig. 3 is a logic diagram of a second logic result according to an embodiment of the present invention;
Fig. 4 is a logic diagram of a third logic result according to an embodiment of the present invention;
Fig. 5 is a trigger logic diagram of an automatic low-pressure full-speed cooling signal according to an embodiment of the present invention;
Fig. 6 is a schematic diagram of an execution flow after an automatic low-pressure full-speed cooling signal is triggered according to an embodiment of the present invention.

### DETAILED DESCRIPTION OF THE INVENTION

For a clearer understanding of the technical features, objects, and effects of the present invention, specific embodiment of the present invention will now be described in detail with reference to the accompanying drawings.

By continuously monitoring the important unit operation parameters of a nuclear power unit and the state of important safety equipment, and obtaining corresponding characteristic parameters through related logic configuration, the accident working condition of 'large-break coincident with a medium-pressure safety injection failure in a primary loop is diagnosed, and after the accident working condition is detected, the low-pressure full-speed cooling action can be automatically executed to quickly relieve the accident working condition, improve the safety margin of the nuclear power unit under the accident condition.

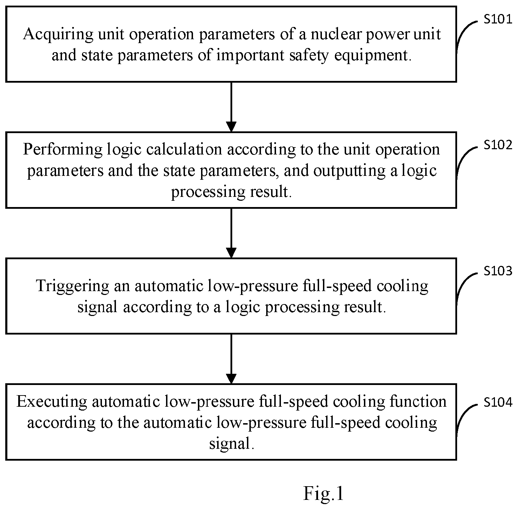

Specifically, Fig. 1 is a flow chart of an alternative embodiment of an automatic low-pressure full-speed cooling method for a nuclear power plant unit according to the present invention.

As shown in Fig. 1, the automatic low-pressure full-speed cooling method for a nuclear power plant unit comprises the following steps:
Step S101: acquiring unit operation parameters of a nuclear power unit and state parameters of important safety equipment. Unit operating parameters comprise: a primary-loop water inventory and residual heat removal state function parameters; state parameters of important safety equipment comprise: state parameters of medium-pressure safety injection and state parameters of a steam generator.

Optionally, in the embodiment of the invention, primary-loop water inventory comprises pressure vessel liquid level data, and residual heat removal state function parameters comprise containment pressure data, primary-loop pressure data and primary-loop temperature data.

Wherein, The pressure vessel liquid level data is monitored in real time and output by a pressure vessel liquid level instrument; the containment vessel pressure data is monitored in real time and output by a containment vessel pressure instrument; the primary-loop pressure data is monitored in real time and output by a primary-loop pressure instrument; and the primary-loop temperature data is monitored in real-time and output by a primary-loop temperature instrument.

Optionally, in the embodiment of the present invention, state parameters of medium-pressure safety injection comprise a safety injection signal, a valve position signal of medium-pressure safety injection, a pump state signal of medium-pressure safety injection and an injection flow signal of medium-pressure safety injection.

The state parameters of a steam generator comprise liquid level data of the steam generator, pressure data of the steam generator, and internal radioactivity data of the steam generator.

Step S102, performing logic calculation according to the unit operation parameters and the state parameters, and outputting a logic processing result.

In some embodiments, the logic calculation according to the unit operation parameters and the state parameters comprises: analyzing the primary-loop water inventory or the residual heat removal state function parameters, and outputting a first logic result; analyzing the state parameters of medium-pressure safety injection, and outputting a second logic result; analyzing the state parameters of the steam generator, and outputting a third logic result and performing logic calculation according to a first logic result, a second logic result and a third logic result.

Optionally, in some embodiments, analyzing the primary-loop water inventory or the residual heat removal state function parameters, and outputting a first logic result comprises: judging whether the primary-loop water inventory is degraded according to a pressure vessel liquid level data, and outputting a degradation judgment result of the primary-loop water inventory; performing an undercooling logic calculation according to a containment pressure data, a primary-loop pressure data and s primary-loop temperature data, and outputting undercooling data. Judging whether the residual heat removal state function is degraded or not according to a undercooling data, and outputting the residual heat removal state function degradation judgment result; performing OR logic calculation according to a degradation judgment result of the primary-loop water inventory and the degradation judgment result of residual heat removal state function, and outputting an OR logic calculation result, wherein the OR logic calculation result is a first logic result.

Specifically, whether a primary-loop water inventory is degraded or not can be judged by comparing a pressure vessel liquid level data with a bottom liquid level data of the primary-loop hot leg. Wherein, when a pressure vessel liquid level data is less than the liquid level data at the bottom of the primary-loop hot leg, it can be judged that the primary-loop water inventory is degraded.

In an embodiment of the invention, the calculation of the undercooling data can be obtained through configuration and calculation by adopting a existing calculation method of a PWR unit.

Whether the residual heat removal state function parameter is degraded or not can be judged according to a undercooling data by comparing the undercooling data with a undercooling low threshold, and if the undercooling data is less than the undercooling low threshold (-Σ), the residual heat removal state function parameter is judged to be degraded.

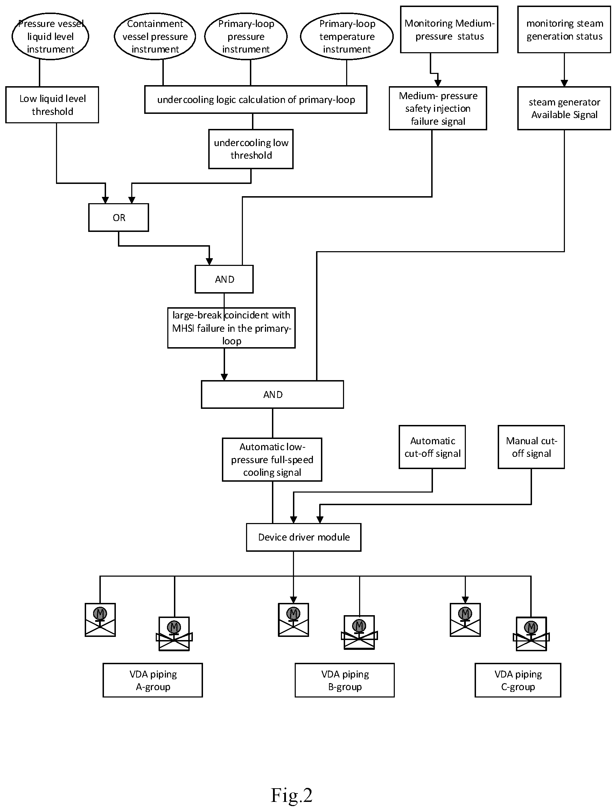

Optionally, in an embodiment of the present invention, as shown in Fig. 2, a first logic result can be obtained by performing an OR logic calculation according to a degradation judgment result of the primary-loop water inventory and a residual heat removal state function degradation judgment result. Wherein the first logic result is either 1 or 0.That is, the first logic result is 1 when the primary-loop water inventory is degraded, the residual heat removal state function parameter is degraded, or both the primary-loop water inventory and the residual heat removal state function parameter are degraded, and the first logic result is 0 when neither the primary-loop water-inventory nor the residual heat removal state function parameters are degraded.

In some embodiments, analyzing the state parameters of medium-pressure safety injection and outputting a second logic result comprises: performing logic calculation according to a valve position signal, a pump state signal and an injection flow signal to obtain an operation state result of medium-pressure safety injection; and performing logic calculation according to a safety injection signal and an operation state result to obtain a second logic result.

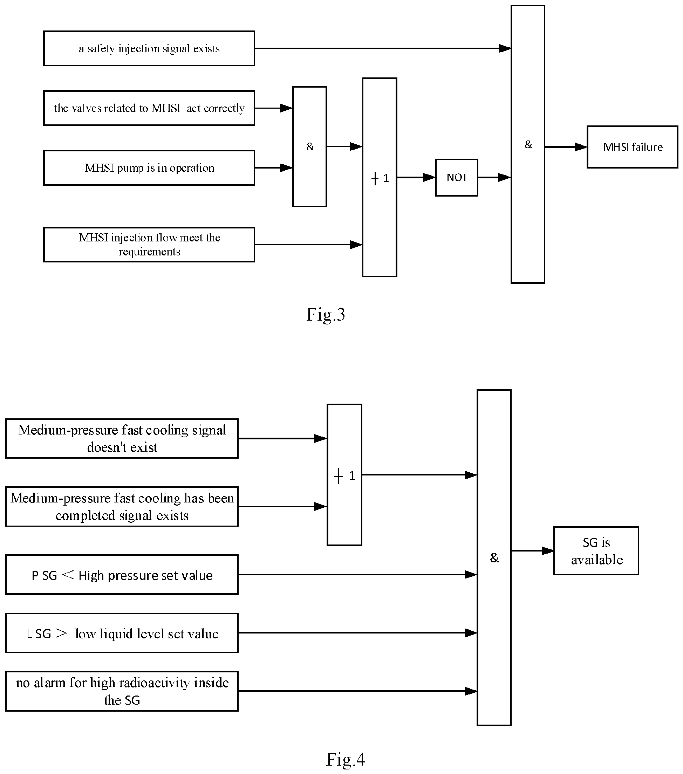

Specifically, as shown in Fig. 3, the state monitoring of the medium-pressure safety injection is judged by monitoring whether a large-break coincident with a medium-pressure safety injection in the primary-loop is in operation when the safety injection signal exists.

When a safety injection signal exists, whether a valve operates correctly is judged according to a valve position signal, whether a pump operates is judged according to a pump state signal, and make a judgment according to whether an injection flow meets the requirement.

As shown in Fig. 3, when a safety injection signal exists, but the three groups of MHSIs are not in operation (that is, the valves related to MHSI fail to act correctly, the MHSI pump is not in operation, and the MHSI injection flow fails to meet the requirements), it indicates that all three groups of MHSI fail. At this time, a second logic result obtained is that the MHSI is in failure.

In some embodiments, analyzing the state parameters of the steam generator and outputting a third logic result comprises: comparing a liquid level data of the steam generator with a liquid level threshold and outputting a liquid level comparison result, comparing a pressure data of the stream generator with a pressure threshold and outputting a pressure comparison result, and comparing an internal radioactivity data of the steam generator with a radioactivity threshold and outputting a radioactivity comparison result; And performing logic calculation according to the liquid level comparison result, the pressure comparison result, the radioactivity comparison result and the medium-pressure fast cooling signal, and outputting a third logic result.

Specifically, in an embodiment of the present invention, a third logic result is the state monitoring result of the steam generator. Wherein, the state monitoring results of the steam generator comprise: available and unavailable.

As shown in Fig. 4, a level data of the steam generator is represented by (L SG), and a pressure data of the steam generator is represented by (P SG).

As shown in Fig. 4 when a medium-pressure fast cooling signal exists, the primary-loop performs fast cooling action through the steam generator (SG),the steam atmospheric discharge system (VDA) and a certain cooling rate, and then, the low-pressure full-speed cooling cannot be performed through the steam generator and the steam atmospheric discharge system; When the liquid level data of the steam generator is lower than the low liquid level set value, or the pressure data of the steam generator is higher than the high pressure set value, the primary-loop heat cannot be derived from the steam generator, and the steam generator cannot be used, that is, the third logic result is a steam generator unavailable signal; When the radioactivity inside the steam generator is high, in order to ensure the containment of the radioactivity, the steam generator is also unavailable, that is, the third logic result is a signal that the steam generator is unavailable, only when the pressure data of the steam generators is lower than the high pressure set value, the liquid level data of the steam generators is higher than the low liquid level set value, and there is no alarm for high radioactivity inside the stream generator, the steam generator is available, that is, the third logic result is the signal that the steam generator is available.

In some embodiments, performing a logic calculation according to a first logic result, a second logic result, and a third logic result and outputting a logic processing result comprises performing an AND logic calculation according to the first logic result and the second logic result to obtain an AND logic calculation result; Judging whether a large-break coincident with a medium-pressure safety injection failure accident in the primary-loop occurs or not according to the AND logical calculation result, and outputting a diagnosis result of the large-break coincident with a medium-pressure safety injection failure accident in the primary-loop; performing logic calculation according to a diagnosis result of the large-break coincident with medium-pressure safety injection failure accident in the primary-loop and a third logic result, and outputting a logic processing result to trigger an automatic low-pressure full-speed cool signal of the unit.

Specifically, as shown in Fig. 2, when the first logic result is 1 and the second logic result is a medium-pressure safety injection failure signal, it can be judged that the AND logic calculation result is 1. At this time, it can be diagnosed that a large-break coincident with a medium-pressure safety injection failure accident in the primary-loop of the unit occurs, and a AND logic calculation is performed in combination with the third logic result to obtain a logic processing result.

In step S103, triggering an automatic low-pressure full-speed cooling signal according to a logic processing result.

Optionally, in an embodiment of the present invention, the logic processing result comprises 1 or 0.When the logic processing result is 1, the automatic low-pressure full-speed cooling signal is triggered; when the logic processing result is 0, the automatic low-pressure full-speed cooling signal is not triggered.

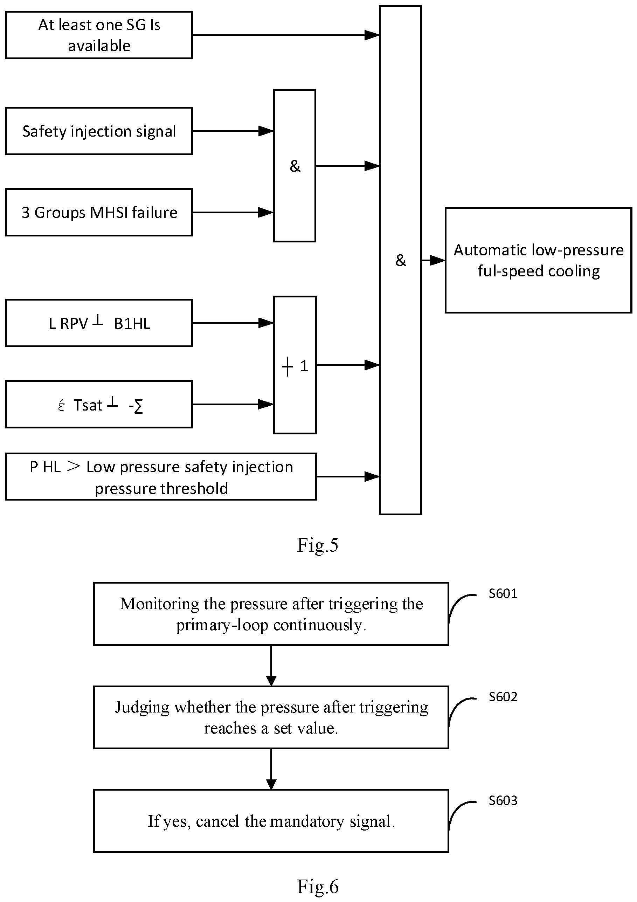

In a specific embodiment, as shown in Fig. 5, a PWR nuclear power plant is taken as an example to illustrate the automatic low-pressure full-speed cooling signal triggering of the nuclear power plant. Wherein, in Fig.5, L RPV is used for representing the liquid level data of the primary-loop, B 1HL is used for representing the liquid level at the bottom of the primary-loop piping section, ΔTsat is used for representing the undercooling data of the primary-loop,-E is used for representing the threshold of undercooling, and P HL is used for representing the injection pressure data of low-pressure safety injection.

As shown in Fig. 5, it is necessary to ensure that at least one steam generator and its corresponding steam atmospheric emission system can act correctly to derive the heat of the primary-loop during operation by monitoring the accident condition of "large-break coincident with a medium-pressure safety injection failure in the primary-loop" in real time. At the same time, the purpose of this automatic action is to ensure that the low-pressure safety injection injects cooling water into the primary-loop, so as to restore the primary-loop water inventory and ensure the continuous discharge of core residual heat. Therefore, when the primary-loop pressure is lower than the injection pressure threshold of low-pressure safety injection, the low-pressure safety injection can be injected normally, and the low-pressure full-speed cooling action is not required.

In step S104, executing automatic low-pressure full-speed cooling function according to the automatic low-pressure full-speed cooling signal.

In some embodiments, executing automatic low-pressure full-speed cooling function according to the automatic low-pressure full-speed cooling signal comprises driving the actuator to automatically act or stop acting according to the automatic low-pressure full-speed cooling signal.

And an actuate device may be a valve of steam atmospheric discharge system. As shown in Fig. 2, when the automatic low-pressure full-speed cooling signal is triggered, the device driver module can drive the relevant valves of the steam atmospheric discharge system to automatically act or stop acting, so as to complete the automatic low-pressure full-speed cooling. As shown in Fig. 2, the automatic low-pressure full-speed cooling is realized by automatically actuating or stopping the A-group piping valves of the steam atmospheric discharge system, the B-group piping valves of the steam atmospheric discharge system and the C-group piping valves of the steam atmospheric discharge system.

Further, in some embodiments, after executing automatic low-pressure full-speed cooling according to the automatic low-pressure full-speed cooling signal, the method further comprises:
In step S601, monitoring the pressure after triggering the primary-loop continuously.

In step S602, judging whether the pressure after triggering reaches a set value.

Step S603: If yes, cancel the mandatory signal.

Specifically, after the automatic low-pressure full-speed cooling signal is triggered, the device driver module drives the execution equipment to act. When the pressure of the primary-loop is lower than the injection pressure of the low-pressure safety injection, the cut-off module is activated to stop the low-pressure full-speed cooling function, and then the main control room operator can manually control the state of the primary-loop.

As shown in Fig. 6, a PWR nuclear power plant is taken as an example to illustrate the automatic low-pressure full-speed cooling and cut-off logic of the nuclear power plant.

Wherein, the steam atmospheric discharge system of the PWR nuclear power plant is provided with three groups of steam atmospheric discharge valves, and each group of steam atmospheric discharge valves is arranged on a main steam piping corresponding to three steam generators. After receiving the automatic low-pressure full-speed cooling signal, the atmospheric steam discharge valves of the three groups are forced to be in the automatic opening position, and manual adjustment signal is nolonger received from the operator. Continuously monitor the pressure of the primary-loop. When the pressure of the primary-loop reaches a set value, stop the automatic low-pressure full-speed cooling, that is, automatically cancel the forced signal of all steam atmospheric emission system piping, and receive the manual adjustment of the operator. In addition, the operator can also be set to manually stop the unit's low-pressure full-speed cooling function, that is, to cancel the unit's automatic low-pressure full-speed cooling action in the case of emergency intervention and adjustment by the operator.

Further, after the automatic low-pressure full-speed cooling of the nuclear power unit is triggered, an operator can be reminded of the triggering of the automatic action through an audible and visual alarm system in the master control room, so that the operator can call relevant display pictures, check the correct action of relevant equipment, and monitor the parameter state of a primary-loop.

The automatic low-pressure full-speed cooling method for a nuclear power plant unit can automatically execute a low-pressure full-speed cooling function under the working condition of the extended design accident of the PWR nuclear power unit due to the fact that the large-break coincident with a medium-pressure fast cooling failure in the primary-loop, and can automatically diagnose the accident under the extended working condition by monitoring the state of the unit in real time, At the same time, relevant safety facilities immediately take mitigation actions aiming at the accident, such as quickly recovering the water inventory of the primary-loop, quickly reducing the pressure of the primary-loop below the injection pressure of a low threshold, and quickly injecting the emergency cooling water of the reactor core into a reactor coolant system; and meanwhile, the method can also obviously improve the response efficiency of an operator to the accident working condition, meet the available time window of low-pressure full-speed cooling response to the accident, avoid core damage caused by exceeding the available time window of important mitigation actions, and also reduce the workload of operators and avoid the risk of human factors. In addition, it is of great positive significance to alleviate the deterioration of unit state parameters caused by the accident in time and to improve the safety margin of PWR nuclear power unit in the accident.

In addition, the intelligent and automatic level of the nuclear power plant can be further improved by virtue of the accident condition monitoring, automatic action and audible and visual alarm of the nuclear power plant unit.

The invention also provides an automatic low-pressure full-speed cooling system for a nuclear power plant unit, which can be used for realizing the automatic low-pressure full-speed cooling method for a nuclear power plant unit disclosed by the embodiment of the invention.

Specifically, the nuclear power plant unit automatic low-pressure full-speed cooling system comprises:
An acquisition unit is used for acquiring unit operation parameters of a nuclear power unit and state parameters of important safety equipment. Unit operating parameters comprise: primary-loop water inventory of a PWR and residual heat removal state function parameters; state parameters of important safety equipment comprise: state parameters of medium-pressure safety injection and state parameters of a steam generator.

A logic calculation unit is used for performing logic calculation according to the unit operation parameters and the state parameters and outputting a logic processing result.

A trigger unit is used for triggering an automatic low-pressure full-speed cooling signal according to the logic processing result.

And an execution unit is use for executing automatic low-pressure full-speed cool function according to the automatic low-pressure full-speed cooling signal.

In this specification, each embodiment is described in a progressive manner, and each embodiment focuses on the differences from other embodiments, and the same and similar parts of each embodiment can be referred to each other. For the device disclosed in the embodiment, since it corresponds to the method disclosed in the embodiment, the description is relatively simple, and related parts can be described in the method part.

the skilled in the art will further appreciate that the elements and algorithm steps of the various examples described in connection with the embodiments disclosed herein can be implemented as electronic hardware, computer software, or a combination of both, the foregoing specification, the components and steps of the various examples have been described generally in terms of function for the purpose of clearly illustrating the interchangeability of hardware and software. Whether these functions are implemented in hardware or software depends on the specific application and design constraints of the technical solution. Skilled artisans can implement the described functionality using different methods for each particular application, but such implementations should not be construed as exceeding the scope of the invention.

The steps of a method or algorithm described in connection with the embodiments disclosed herein can be embodied directly in hardware, in a software module executed by a processor, or in a combination of the two. The software module can be placed in a random access memory (RAM), a memory, a read only memory (ROM), an electrically programmable ROM, an electrically erasable programmable ROM, a register, a hard disk, a removable disk, a CD-ROM, or any other form of storage medium known in the art.

The above embodiments are only for illustrating the technical concepts and features of the present invention, and are intended to enable those skilled in the art to understand the contents of the present invention and to implement the same, and do not limit the scope of protection of the invention. All equivalent change and modifications accord to that scope of the appended claims are intended to be comprised in the scope of the appended claims.

## Claims

1. An automatic low-pressure full-speed cooling method for a nuclear power plant unit, comprising following steps:
acquiring unit operation parameters of a nuclear power unit and state parameters of important safety equipment, wherein the unit operation parameters comprise primary-loop water inventory and residual heat removal state function parameters, and the state parameters of important safety equipment comprise state parameters of medium-pressure safety injection and state parameters of a steam generator;
performing logic calculation according to the unit operation parameters and the state parameters and outputting a logic processing result;
triggering an automatic low-pressure full-speed cooling signal according to the logic processing result;
executing an automatic low-pressure full-speed cooling function according to the automatic low-pressure full-speed cooling signal.

2. The automatic low-pressure full-speed cooling method for a nuclear power plant unit according to claim 1, wherein the primary-loop water inventory comprises pressure vessel liquid level data, and the residual heat removal state function parameters comprise containment pressure data, primary-loop pressure data and primary-loop temperature data;
the pressure vessel liquid level data is monitored in real time and output by a pressure vessel liquid level instrument, the containment vessel pressure data is monitored in real time and output by a containment vessel pressure instrument, the primary-loop pressure data is monitored in real time and output by a primary-loop pressure instrument, and the primary-loop temperature data is monitored in real time and output by a primary-loop temperature instrument;
the state parameters of medium-pressure safety injection comprise a safety injection signal, a valve position signal of the medium-pressure safety injection, a pump state signal of the medium-pressure safety injection and an injection flow signal of the medium-pressure safety injection;
the state parameters of the steam generator comprise liquid level data of the steam generator, pressure data of the steam generator and internal radioactivity data of the steam generator.

3. The automatic low-pressure full-speed cooling method for a nuclear power plant unit according to claim 2, wherein the step of performing logic calculation according to the unit operation parameters and the state parameters and outputting logic processing results comprises following steps:
analyzing the primary-loop water inventory or the residual heat removal state function parameters , and outputting a first logic result;
analyzing the state parameters of the medium-pressure safety injection and outputting a second logic result;
analyzing the state parameters of the steam generator, and outputting a third logic result;
after performing logic calculation according to the first logic result, the second logic result and the third logic result, and outputting the logic processing result.

4. The automatic low-pressure full-speed cooling method for a nuclear power plant unit according to claim 3, wherein the step of analyzing the primary-loop water inventory or the residual heat removal state function parameter and outputting a first logic result comprises following steps:
judging whether the primary-loop water inventory is degraded or not according to the pressure vessel liquid level data, and outputting a degradation judgment result of the primary-loop water inventory;
performing undercooling logic calculation according to the containment pressure data, the primary-loop pressure data and the primary-loop temperature data, and outputting an undercooling data;
judging whether the residual heat removal state function parameter is degraded or not according to the undercooling data, and outputting a degradation judgment result of the residual heat removal state function parameter;
and performing OR logic calculation according to the degradation judgment result of the primary-loop water inventory and the degradation judgment result of the residual heat removal state function parameter, and outputting an OR logic calculation result, wherein the OR logic calculation result is the first logic result.

5. The automatic low-pressure full-speed cooling method for a nuclear power plant unit according to claim 4, wherein the step of judging whether the residual heat removal state function parameter is degraded according to the undercooling data comprises:
comparing the undercooling data with a undercooling threshold;
and if the undercooling data is smaller than the undercooling low threshold, judging that the residual heat removal state function parameter is degraded.

6. The automatic low-pressure full-speed cooling method for a nuclear power plant unit according to claim 4, wherein the first logic result is 1 or 0;
the step of performing OR logic calculation according to the degradation judgment result of the primary-loop water inventory and the degradation judgment result of residual heat removal state function parameter, and outputting an OR logic calculation result comprises:
if the primary-loop water inventory is degraded and the residual heat removal state function parameter is degraded, the OR logic calculation result is 1;
if the primary-loop water inventory and the residual heat removal state function parameters are not degraded, the OR logic calculation result is 0.

7. The automatic low-pressure full-speed cooling method for a nuclear power plant unit according to claim 3, wherein the step of analyzing the state parameters of medium-pressure safety injection and outputting a second logic result comprises:
performing logic calculation according to the valve position signal, the pump state signal and the injection flow signal to obtain an operation state result of the medium-pressure safety injection;
and performing logic calculation according to the safety injection signal and the operation state result to obtain the second logic result.

8. The automatic low-pressure full-speed cooling method for a nuclear power plant unit according to claim 3, wherein the step of analyzing the state parameters of steam generator and outputting a third logic result comprises:
comparing the liquid level data of steam generator with a liquid level threshold and outputting a liquid level comparison result;
comparing the pressure data of steam generator with a pressure threshold and outputting a pressure comparison result;
comparing the internal radioactivity data of the steam generator with a radioactivity threshold and outputting a radioactivity comparison result;
after performing logic calculation according to the liquid level comparison result, the pressure comparison result, the radioactivity comparison result and a medium-pressure fast cooling signal, and outputting the third logic result.

9. The automatic low-pressure full-speed cooling method for a nuclear power plant unit according o claim 3, wherein the step of performing logic calculation according to the first logic result, the second logic result and the third logic result, and outputting the logic processing result comprises:
performing AND logic calculation according to the first logic result and the second logic result to obtain an AND logic calculation result;
judging whether the large-break coincident with a medium-pressure safety injection failure accident in the primary-loop occurs or not according to the logical calculation result, and outputting a diagnosis result of the large-break coincident with a medium-pressure safety injection failure accident in the primary-loop;
after performing logic calculation according to the diagnosis result of the large-break coincident with a medium-pressure safety injection failure accident in the primary-loop and the third logic result, and outputting the logic processing result to trigger an unit automatic low-pressure full-speed cool signal.

10. The automatic low-pressure full-speed cooling method for a nuclear power plant unit according to claim 1, wherein the step of executing automatic low-pressure full-speed cooling according to the automatic low-pressure full-speed cooling signal comprises:
driving an executing equipment to automatically act or stop act according to the automatic low-pressure full-speed cooling signal.

11. The automatic low-pressure full-speed cooling method for a nuclear power plant unit according to claim 1, wherein after executing automatic low-pressure full-speed cooling according to the automatic low-pressure full-speed cooling signal, the method further comprises:
monitoring the pressure after triggering of the primary-loop continuously;
judging whether the pressure after triggering reaches a set value;
If yes, canceling mandatory signal.

12. An automatic low-pressure full-speed cooling system for a nuclear power plant unit, comprising:
an acquisition unit is used for acquiring unit operation parameters of a nuclear power unit and state parameters of important safety equipment, wherein the unit operation parameters comprise the primary-loop water inventory of a PWR and residual heat removal state function parameters, and the state parameters of important safety equipment comprise state parameters of medium-pressure safety injection and state parameters of a steam generator;
a logic calculation unit is used for performing logic calculation according to the unit operation parameters and the state parameters and outputting a logic processing result;
a trigger unit is used for triggering an automatic low-pressure full-speed cooling signal according to the logic processing result;
and an execution unit is use for executing automatic low-pressure full-speed cool function according to the automatic low-pressure full-speed cooling signal.
